# EUROPEAN PATENT APPLICATION

(11) **EP 4 678 137 A1**
(43) Date of publication of application: **14.01.2026**
(21) Application number: 24187408.0
(22) Date of filing: 09.07.2024
(51) Int. Cl.: A61C 7/08, A61C 7/36

(54) **NEW CUTOUT FOR ELASTIC ALIGNERS, METHOD OF MANUFACTURING SAME AND SYSTEM FOR ORTHODONTIC TREATMENT**

(71) Applicant: UAB "Ordoline", 03162 Vilnius (LT)
(72) Inventor: Listopadskyte, Lina, Vilnius (LT); Kunkis, Danius, Vilnius (LT); Visniauskis, Ignas, Vilnius (LT); Vosylius, Kestutis, Vilnius (LT); Maskalo, Karolis, Vilnius (LT); Osipenko, Aleksandr, Vilnius (LT)
(74) Representative: Metida

(57) **Abstract**

This patent description outlines the comprehensive details of the improved elastic cutout in orthodontic aligners, comprising a polymeric material formed with multiple cavities configured to apply a load to at least one tooth to cause movement of said tooth. The integrated cutout for elastics is positioned on the aligner, wherein cutout for elastics is configured to retain an elastic band and wherein cutout for elastics is configured to be connected with the button arranged on the opposite aligner. The cutout for elastic is integrated into aligner and cutting of the cutout for elastic is performed on bubble-like element. This invention also provides a method for manufacturing of the cutout for elastics and the orthodontic treatment system which comprises the aligner with incorporated cutout for elastics, the opposite aligner on which a secure lock-up mechanism is fixed and elastic band which specifically is designed to create an elastic connection between the secure locking mechanism and the cutout for elastics.

## Description

### FIELD OF THE INVENTION

The present invention relates to orthodontic devices, specifically to a structural improvement in orthodontic aligners designed to enhance the functionality and comfort of elastics used in orthodontic treatments.

### BACKGROUND OF THE INVENTION

Orthodontic procedures frequently utilize aligners in combination with elastics to rectify various types of dental misalignments. However, conventional aligner designs may permit the elastics to shift or rotate, potentially diminishing the treatment's effectiveness and causing discomfort for the patient, or in some cases, leading to gum recession. Therefore, there is a critical need for an enhanced aligner design that reliably secures elastics in position to improve the biomechanics of tooth movement. Currently, it is impractical for patients to wear aligners, sectional braces, and other auxiliary devices simultaneously. To accommodate sectional braces or other auxiliary devices, a thermoformed aligner often needs significant trimming. However, this trimming can compromise the aligner's integrity, potentially reducing its ability to provide the necessary retention, anchorage, and force required for the planned tooth movement. Similarly, when aligners are cut to accommodate buttons for elastic attachments that are bonded to the teeth, the modifications can weaken the aligner in those areas. This may result in unpredictable movement of the adjacent teeth. Caplin hooks, made of stainless steel, represent another type of attachment similar to metal buttons. These hooks feature a miniature base pad that is not ideally contoured for use with dental aligners. Furthermore, patients may find the hook component, which is designed to secure the elastic band, challenging to manage.

There are several attachment options available for using elastics with clear aligners. These attachments are typically bonded directly to the teeth within a cutout window in the aligner, which is positioned at the gumline, or the gingival or cervical one-third of the crown. Originally developed for traditional braces, these attachments were intended to be placed at the center of the crown. Moreover, many were not designed to withstand the tension of interact dental elastics, which span between the upper and lower jaw. Adapting these attachments for use with clear aligners has led to issues such as detachment from the teeth, challenges for patients in securing the elastics, and discomfort that can irritate the cheeks and gums.

US201829639669 discloses orthodontic elastic attachments that are customized to fit within the cutout windows of dental aligners, thus improving adhesion and minimizing inadvertent detachment from the tooth surface. The base pads are designed to have a shape that complements the present shape of the cutout windows like a puzzle piece. To improve adhesion to the tooth surface, the base pad may have its surface area maximized within the cutout windows. Also, for improved adhesion, the base pad may be contoured to the dental anatomy of the tooth at the gumline for an intimate fit. EP16161695 discloses s an orthodontic appliance in the form of an aligner of polymeric material formed with cavities for teeth that cause movement of at least one tooth, where the appliance is combined with an extender of polymeric material in a shape matable to the aligner, which applies a supportive load to the aligner to assist in the movement of at least one tooth by the aligner.

It would be beneficial to develop an alternative aligner and method for producing aligners that can be securely and mechanically attached to auxiliary devices and mechanisms. Such aligner and method should be cost-effective, reusable, time-efficient, and minimize material waste. Importantly, they should also decrease the necessity to create multiple dental casts for various stages of orthodontic treatment.

### SUMMARY OF THE INVENTION

The aim of the invention is to provide an improved cutout for elastics in orthodontic aligners that features a secure lock-up mechanism. This mechanism ensures that the elastics stay in their intended position, thereby increasing the accuracy and efficiency of the orthodontic force application. The new aligner minimizes contact between the elastics and gums, reducing potential gum irritation and recession, and enhancing patient comfort throughout the treatment period.

An teeth straightening aligner for orthodontic treatment of a patient's teeth comprises a polymeric material formed with multiple cavities configured to apply a load to at least one tooth to cause movement of said tooth; an integrated cutout for elastic positioned on the aligner, wherein cutout for elastic is configured to retain an elastic band and wherein cutout for elastic is configured to be connected with the button arranged on the opposite aligner.

The cutout for elastic is integrated into aligner which is upper aligner or lower aligner. The cutting of the cutout for elastic is performed on bubble-like element. The bubble-like element is cylindrical element.

A method for manufacturing an orthodontic aligner comprises creating the following steps: a personalized digital orthodontic treatment plan based on data from the patient's initial visit, including extraoral and intraoral photos, intraoral scans, and X-rays of a patient's teeth; printing a 3D model of each planned treatment step reflecting the desired tooth arrangement, including pre-designed bubble-like element for cutting the elastics; using a vacuum forming process to mold a three-layer plastic sheet over the 3D model to form the aligner;
cutting of bubble-like element configured to retain the elastic band; trimming and polishing the aligners to fit the patient's dental structure accurately, including making specific cutouts for elastics to specified depth and dimensions.

The invention describes an orthodontic treatment system comprising an orthodontic aligner,
a secure lock-up mechanism, elastic bands specifically designed to interact with the secure lock-up mechanism and the aligners' cutouts, a treatment protocol detailing the placement and adjustment of the elastic bands to achieve optimal orthodontic outcomes. The secure lock-up mechanism is a button.

The elastic cutout is connected with the button designed to maintain the position of the elastic band during orthodontic treatment. The elastic band is configured to hook on the cutout for elastic on one aligner and when stretched it is configured to hook on the button on the opposite aligner.

### BRIEF DESCRIPTION OF DRAWINGS

Fig. 1 shows a pre-designed element with bubble-like configuration.
Fig. 2 shows a cutting of the bubble-like element and it's location.
Fig. 3 shows a cutout for elastic view.
Fig. 4 shows an aligner with two cutouts for elastic in both sides.
Fig. 5 shows an orthodontic elastic band placed on the cutout for elastic.

Fig 6 shows a facial view of the orthodontic system consisting of upper and lower aligners which are applied to the teeth within the cutouts for elastic. The elastic band is inserted in the cutout for elastic of one of the aligners and is hooked on the button on the aligner on the opposite side when stretching.

### DETAILED DESCRIPTION OF THE INVENTION

Clear aligners are orthodontic devices that are used to straighten teeth as an alternative to dental braces. These removable plastic trays are customized to an individual's teeth and apply incremental pressure as they are worn and periodically changed. Although aligners can straighten teeth, they are not designed to align the bite on their own. To address malocclusion or bite misalignment, dental elastics are often employed alongside braces or aligners. With braces, elastics can be attached directly to the brackets or archwires. However, when using aligners, attachments may need to be affixed to certain teeth to facilitate the use of elastics.

The purpose of this invention is to improve the biomechanics of teeth movement by preventing the displacement, rotation, or slippage of elastics. Prepared orthodontic device reduces the risk of gum recession by minimizing the contact of elastics with the gums and enhance patient comfort by avoiding irritation of the gum line caused by elastics.

The exemplary embodiments detailed and depicted here feature orthodontic elastic aligners with a uniquely designed cutout for elastics that is optimized for use with dental aligner technology.

The aligners are made from a high-quality, medical-grade thermoplastic polymer known for its durability, flexibility, and biocompatibility. The material consists of a three-layer plastic structure that balances strength and elasticity, crucial for effective force application during orthodontic treatments.

The fabrication of aligners involves a combined physical and computer-assisted molding process. Initially, the aligners are made using a suitable impression material, such as three-layered ABA-Foil which consists of two outer layers and inner layer. Outer layers are selected fom hard copolyester and inner layer is selected from soft thermoplastic elastomer (SCHEU-DENTAL GmbH).

Provided herein are exemplary embodiments may include an orthodontic elastic aligner with a unique cutout for elastic.

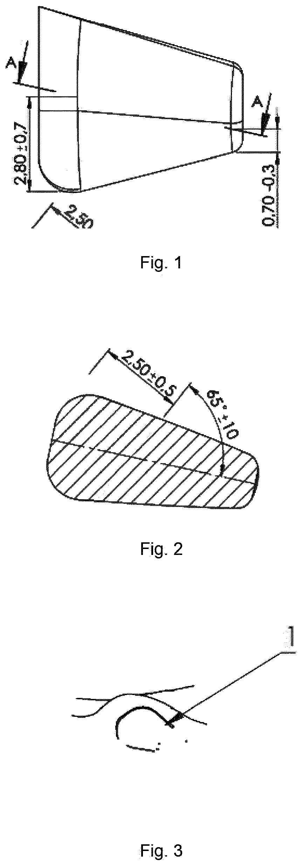

Fig. 1 shows bubble-like element which is incorporated in the aligner (2A). In the best mode the convexity of pre-designed cylindrical bubble-like element of the aligner (2A) in its upper part is in the range of 2.1 - 3.5 mm and the convexity in its lower part is in the range of 0.4 - 0.7 mm.

Fig. 2 shows the cutting of the bubble-like cylindrical element which is in the range of 2.00-3.00 mm. The location of cylindrical element on the aligner is 55 - 75° degrees.

The widest point of the cylindrical element is 1.0 - 5.0 mm, preferably 3.4 mm from the front view.

Fig. 3 shows a cutout for elastics (1) used to connect two aligners, upper (2A) and lower (2B).

In one embodiment invention provides an orthodontic system comprising upper aligner (2A) and lower aligner (2B) for moving teeth. Each of aligners is placed on the upper jaw (5) and lower jaw (6) and is used for teeth straightening comprising a polymeric material formed with plural cavities for applying a load to at least one tooth sufficient to cause movement of at least one tooth. Both the 3D model and the aligner (2A) have the pre-designed bubble-like element for cutting the elastics (1) which are arranged on both sides of the aligner (2A). The pre-designed bubble-like element is cylindrical in shape. In the bubble-like element a cut is formed from the side of the outer edge of the aligner (2A) and the elastic cutout (1) is prepared. The integrated cutout for elastics (1) within the aligner (2A) is configured to retain an elastic band (3).

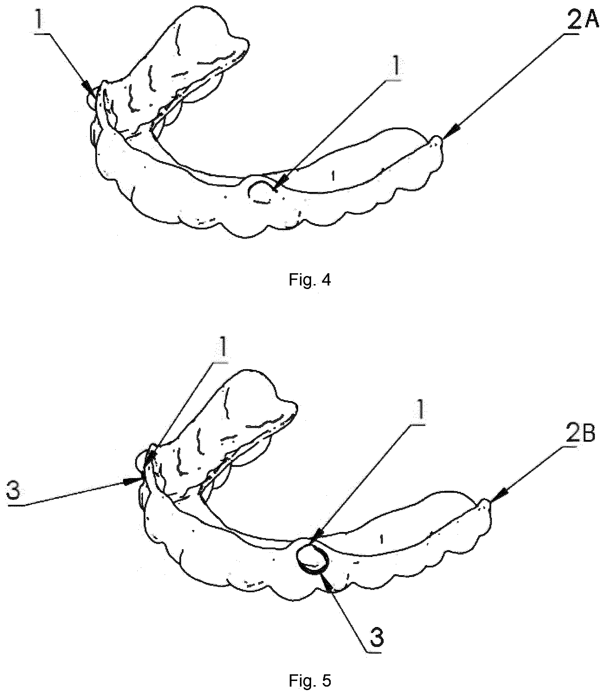

Fig. 4 shows the aligner (2A) in which two cutout elastics (1) are integrated on both sides of aligner (2A).

Fig. 5 shows the secure lock-up mechanism which is a button (4) which is fixed with the composite on the opposite aligner (2B) diagonally to the cutout for elastics (1).

This cutout for elastics (1) is designed in the treatment plans closed to the 3rd and 4th teeth. The button (4) on the opposite aligner (2B) is taken into account when determining the location of the cutout for elastics (1) in the aligner (2A), considering to its distance and direction. The button (4) and its position and direction are planned according to established internal treatment protocols, based on medical studies, scientific articles, so that the biomechanical movements of the teeth take place correctly.

The location of cutout for elastics (1) is determined based on the location of the button (4) on the aligner (2B), the distance between cutout for elastics (1) and the button (4) and direction in relation with each other.

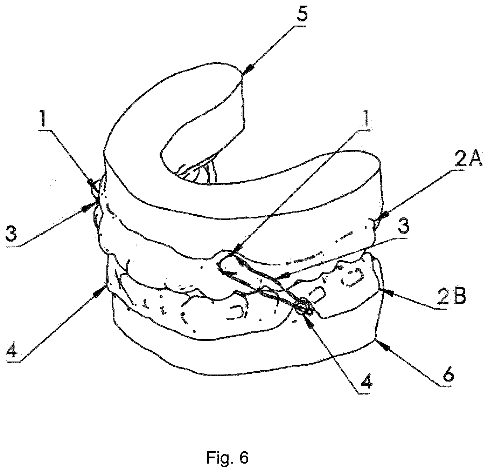

Fig. 6 is an illustration of the system of the orthodontic appliances. The cutout for elastics (1) is connected with the button (4) designed to maintain the position of the elastic band (3) during orthodontic treatment. The elastic band (3) is inserted in the cutout for elastics (1) on the upper aligner (2A) and when stretched it is hooked on the button (3) on the lower aligner (2B).

The provided embodiment is an exemplary embodiment of the orthodontic treatment when the cutout for elastics is arranged on the upper aligner and the button is arranged on the lower aligner (Fig. 6). Depending on the bite of the client's teeth, the cutout for elastics (1) can be formed on the lower aligner (2B) and button - on the upper aligner (2A).

The cutout for elastics on an orthodontic aligner specifically engineered to facilitate the attachment and positioning of elastic bands used in dental alignment treatments. This cutout for elastics allows for precise control of the orthodontic forces applied by the elastics, enhancing the effectiveness and comfort of the treatment.

In another embodiment invention comprises manufacturing process of the orthodontic appliance which comprises:
Initial Digital Plan: The treatment process begins with creating a personalized digital plan based on data from the patient's initial visit, including extraoral and intraoral photos, intraoral scans, and X-rays. This plan depicts the sequence of teeth movements and treatment duration.

Model Printing: Once the treatment plan is approved, the new three-dimensional (3D) model reflecting the desire tooth arrangement is prepared. printed 3D model for each planned step of the treatment. These models include the new cutout for elastics design where necessary. Ultimately, a transparent plastic material, such as three-layered ABA-Foil, is employed to cast the aligner over the physical tooth model.

Vacuum Forming: The 3D models are then used in a vacuum forming process where a three-layer plastic sheet is moulded over the model to create the aligners with pre-designed bubble-like element.

Trimming and Polishing: After vacuum forming, the aligners are trimmed to fit the patient's dental structure accurately. The edges are polished, and the specific cutout for elastics is precisely made according to specified depth and dimensions. The cut is prepared on pre-designed bubble-like element of the upper aligner (2A). The bubble-like element preferably is cylindrical in shape. The secure lock-up mechanism (4) designed to maintain the position of the elastic band (3) during orthodontic treatment is fixed on the lower aligner (2B). The secure lock-up mechanism (4) is a button which is fixed with the composite on the opposite aligner (2B) diagonally to the cutout for elastics (1). The elastic band (3) is configured to insert in the cutout for elastics on one aligner (2A) and when stretched it is configured to hook on the button on the opposite aligner (2B).

Quality Control: Each aligner undergoes a stringent quality control process to ensure it meets our high standards of accuracy and comfort. This impression is then filled with plaster to create a permanent three-dimensional model of the patient's teeth. Benefits of the new cutout improves biomechanics of prepared appliance by ensuring that aligners apply consistent and directed force to teeth by preventing their movement from the designated paths. The new cutout reduces gum recession and lowers the incidence of gum damage and potential tooth loss by minimizing the invasive contact of aligners with sensitive gum areas.

The prepared orthodontic appliance with new cutout for elastics enhances patient comfort and reduces potential discomfort by preventing gums from irritating or cutting into the gum line.

It will be understood that like or analogous elements and/or components, referred to herein, may be identified throughout the drawings with like reference characters. It will be further understood that several of the figures are merely schematic representations of the present disclosure. As such, some of the components may have been distorted from their actual scale for pictorial clarity.

## Claims

**1.** An orthodontic aligner for orthodontic treatment of a patient's teeth comprising a polymeric material formed with multiple cavities configured to apply a load to at least one tooth to cause movement of said tooth, **characterised in that** an integrated cutout for elastics is positioned on the aligner, wherein cutout for elastics is prepared by cut on pre-designed bubble-like element.

**2.** The orthodontic aligner according to claim 1, wherein cutout for elastics is in cylindrical form.

**3.** The orthodontic aligner according to claims 1 or 2, wherein the cutout for elastics is integrated into upper aligner.

**4.** The orthodontic aligner according to claims 1 or 2, wherein the cutout for elastics is integrated into lower aligner.

**5.** The orthodontic aligner according to any of claims 1-4, wherein the cutting of the cutout for elastics is performed on bubble-like cylindrical element.

**6.** The orthodontic aligner according to any of claims 1-5, wherein cutout for elastics is configured to retain an elastic band.

**7.** An orthodontic treatment system comprising:
the aligner as claimed in any preceding claim with incorporated cutout for elastics;
the opposite aligner on which a secure lock-up mechanism is fixed;
elastic band which specifically is designed to create an elastic connection between the secure locking mechanism and the cutout for elastics.

**8.** The orthodontic treatment system of claim 7, wherein a secure lock-up mechanism is button.

**9.** The orthodontic treatment system according to claim 7 or 8, wherein the elastic band is insertable into the cutout for elastics.

**9.** The orthodontic treatment system of claims 7 and 8, wherein the cutout for elastics is connected with the button designed to maintain the position of the elastic band during orthodontic treatment.

**10.** A method for manufacturing an orthodontic aligner, wherein the method comprises:
- printing a 3D model reflecting the desired tooth arrangement,
- using a vacuum forming process to mold a three-layer plastic sheet over the model to create the aligner with incorporated pre-designed bubble-like element;
- trimming and polishing the aligner to fit the patient's dental structure accurately, including cutting of bubble-like element to obtain the cutout for elastics.
